# EUROPÄISCHE PATENTSCHRIFT

(11) **EP 1 046 795 B1**
(45) Veröffentlichungstag und Bekanntmachung des Hinweises auf die Patenterteilung: **17.07.2002**
(21) Anmeldenummer: 00107361.8
(22) Anmeldetag: 05.04.2000
(51) Int. Cl.: F01N 3/22

(54) **Sekundärluftventil zur Zuführung von Zusatzluft zum Abgasstrom einer Brennkraftmaschine**
Secondary air valve for supplying extra air to exhaust gas stream of an internal combustion engine
Vanne d'air secondaire pour alimenter de l'air supplémentaire dans les gaz d'échappement d'un moteur à combustion interne

(30) Priorität: 23.04.1999 DE 19918471
(43) Veröffentlichungstag der Anmeldung: 25.10.2000
(73) Patentinhaber: Bayerische Motoren Werke Aktiengesellschaft, 80809 München (DE)
(72) Erfinder: Egger, Stefan, 86916 Kaufering (DE); Kraft, Klaus, 85051 Ingolstadt (DE)

(56) Entgegenhaltungen:
- CA-A- 974 851
- DE-A- 4 326 340
- US-A- 4 088 101
- US-A- 4 211 074
- US-A- 5 435 129
- US-A- 5 699 664

## Beschreibung

Die Erfindung betrifft ein Sekundärluftventil zur Zuführung von Zusatzluft zum Abgasstrom einer Brennkraftmaschine, gemäß der Merkmale im Oberbegriff des Patentanspruchs 1.

Die Erfindung geht aus von der US 5,699,664. In dieser ist ein Schließventil für eine Sekundärluftzufuhr in einen Abgasstrang einer Brennkraftmaschine beschrieben. Dieses besteht im wesentlichen aus zwei Ventilkammem, die miteinander in Verbindung stehen. In der ersten Kammer befindet sich ein Schließventil, welches mit Hilfe der Federkraft einer Druckfeder den Ausgang der ersten Ventilkammer versperrt. Der Ventilschaft reicht durch eine Verbindungsbohrung von der ersten Ventilkammer in die zweite Ventilkammer hinein, und steht dort in Wirkverbindung mit einer druckempfindlichen Membran. Wird nun mit einer Luftpumpe Druckluft in die erste und somit auch in die zweite Ventilkammer gepumpt, wird die Membran derart verformt, dass der Ventilschaft mit dem Ventilteller entgegen der Federkraft der Druckfeder vom Ventilsitz weggezogen wird, so dass die Druckluft aus der ersten Ventilkammer durch die entstandene Öffnung (Ausgang) entweichen und in den Abgasstrang eingeblasen werden kann. Ein zwischen der ersten Ventilkammer und dem Abgasstrang angeordnetes Rückschlagventil verhindert ein Rückströmen von Abgasen in Richtung der Luftpumpe.

Darüber hinaus ist aus der CA 974851 A eine parallele Anordnung von zwei derartigen Schließventilen bekannt, die jeweils einen Gasstrom regeln. Die parallel angeordneten Schließventile verfügen jeweils über ein eigenes Gehäuse und sind an deren Gasauslässen konstruktiv zusammengeführt. Die Gasstromsteuerung erfolgt für jedes Schließventil separat.

Nachteilig an dieser parallelen Anordnung ist der verdoppelte bauliche Aufwand der zur Realisierung der Doppelschließventilanordnung nötig ist, sowie der doppelte, für jedes Schließventil benötigte Aufwand zur Gasstromsteuerung.

Aufgabe der Erfindung ist es, eine baulich einfachere Betätigungsweise für parallel angeordnete Doppelschließventile darzustellen, bei gleichzeitig reduziertem Aufwand zur Gasstromsteuerung.

Diese Aufgabe wird mit den Merkmalen des Patentanspruchs 1 gelöst.
Die Lösung dieser Aufgabe ist dadurch gekennzeichnet, dass zwei voneinander getrennte Ausgänge und zwei einander gegenüberliegende Übertritte vom Eingang zu den Ausgängen vorgesehen sind, denen jeweils ein Ventilkörper sowie eine diesen öffnende Membran zugeordnet ist. Darüber hinaus ist jeder Ventilkörper über eine Betätigungsstange mit der ihm zugeordneten Membran verbunden und somit in Längsrichtung dieser Betätigungsstange von seinem Ventilsitz abhebbar. Da die Übertritte einander gegenüberliegen, führen die beiden Ventilkörper beim Öffnen eine einander entgegengerichtete Hubbewegung aus. Dabei wird in vorteilhafter Weise lediglich ein einziges, die Ventilkörper in ihrer geschlossenen Position haltendes Federelement benötigt, wenn die beiden Membranen über das als Zugschraubenfeder ausgebildete Federelement miteinander verbunden sind.

Mit den erfindungsgemäßen Merkmalen wird die vom anlegbaren Überdruck bereitgestellte Ventilöffnungskraft dadurch erhöht, dass die Gesamtfläche der diese Ventilöffnungskraft ausübenden Membran vergrößert wird, jedoch wird diese Flächenvergrößerung nicht an einer einzigen Membran vorgenommen, sondern es erfolgt eine Aufteilung des zur Verfügung stehenden Überdrucks auf zwei Membranen, denen jeweils ein eigener Ventilkörper zugeordnet ist. Somit kann bei gleichem Durchsatz durch ein erfindungsgemäßes Sekundärluftventil die Querschnittsfläche jedes einzelnen Ventilkörpers gegenüber einem Sekundärluftventil mit nur einem einzigen Ventilkörper verringert werden. Dies hat zur Folge, dass die an jedem Ventilkörper infolge von Druckpulsationen und damit von örtlich sowie zeitlich begrenzten Unterdruckspitzen in der Brennkraftmaschinen-Abgasanlage erzeugte unerwünschte (und durch das besagte Federelement zu kompensierende) Ventilöffnungskraft reduziert wird, so dass folglich auch die Federkraft dieses Federelementes geringer gewählt werden kann.

Die erfindungsgemäße Ausbildung macht sich somit zwei Effekte gleichzeitig zunutze. Zum einen kann - wie zuletzt geschildert - die Federkraft reduziert werden, so dass über die beiden Membranen lediglich eine verringerte Öffnungskraft erzeugt werden muss, und zum zweiten wird die durch den Überdruck bereitstellbare Ventilöffnungskraft - wie zu Beginn des letzten Absatzes geschildert - durch eine einfach realisierbare Vergrößerung der Membranengesamtfläche, nämlich durch Vorsehen von zwei Membranen, erhöht. Besonders vorteilhaft ist der Einsatz eines erfindungsgemäßen Sekundärluftventils dabei bei zwei- oder mehrflutigen Brennkraftmaschinen-Abgasanlagen, d. h. beispielsweise bei Brennkraftmaschinen der V-Bauart mit zwei Zylinderbänken, denen jeweils ein separater Abgasanlagenstrang zugeordnet ist. Die ohnehin erforderliche Aufteilung des von der Luftpumpe bzw. Sekundärluftpumpe bereitgestellten und dem Brennkraftmaschinenabgas beizumengenden Frischluftstromes auf die beiden (oder mehreren) Abgasanlagenstränge, erfolgt dann bereits im Sekundärluftventil selbst, ohne dass hierfür ein besonderer Steuerungsaufwand oder hoher zusätzlicher Bauaufwand, der keinen weiteren Nutzen bringt, erforderlich wäre.

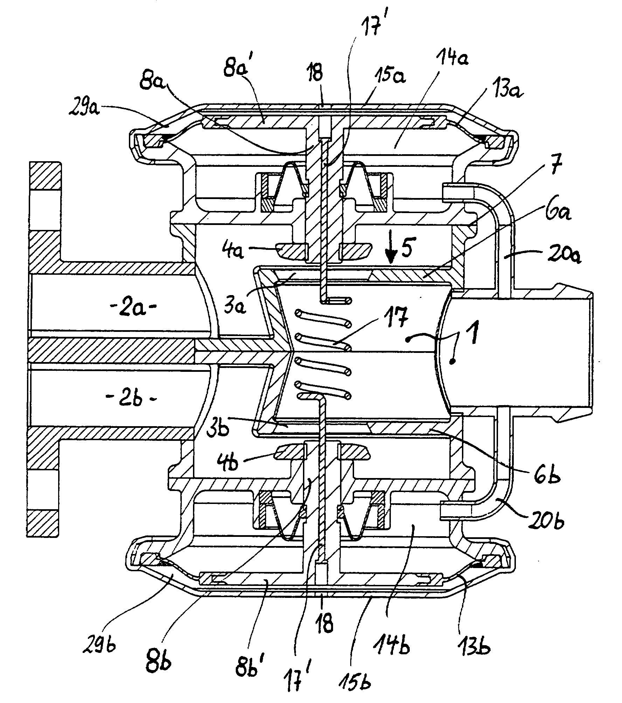

Dies sowie weitere ggf. erfindungswesentliche Merkmale wird/werden auch aus der folgenden Beschreibung eines bevorzugten Ausführungsbeispieles ersichtlich. In der beigefügten einzigen Figur ist dabei ein erfindungsgemäßes Sekundärluftventil im Schnitt dargestellt.
Mit der Bezugsziffer 1 ist der Eingang des Sekundärluftventiles bezeichnet, der mit der Förderseite einer figürlich nicht dargestellten Luftpumpe (= Sekundärluftpumpe) verbunden ist. Der Ausgang des Sekundärluftventiles ist mit der Abgasanlage einer Brennkraftmaschine verbunden und ist zweiteilig ausgeführt, d.h. es sind zwei Ausgänge 2a, 2b vorgesehen, die bspw. zu jeweils einem Abgasanlagenstrang einer Brennkraftmaschine (insbesondere der V-Bauart) führen. Im Innenraum des Sekundärluftventiles sind zwei bezüglich des Eingangs bzw. einer sog. Eingangskammer einander gegenüberliegende Übertritte 3a, 3b vorgesehen, wobei über den (hier oberen) ersten Übertritt 3a eine Verbindung zwischen dem Eingang 1 und dem ersten (hier oberen) Ausgang 2a und über den zweiten (hier unteren) Übertritt 3b eine Verbindung zwischen dem Eingang 1 und dem zweiten (hier unteren) Ausgang 2b hergestellt werden kann, wenn jeweils ein die Übertritte 3a, 3b steuernder Ventilkörper 4a bzw. 4b geöffnet wird. In ihren figürlich dargestellten Positionen geben diese Ventilkörper 4a, 4b die zugeordneten Übertritte 3a, 3b frei, so daß ein von der Sekundärluftpumpe geförderter Frischluftstrom vom Eingang 1 durch diese Übertritte 3a, 3b hindurch zu den Ausgängen 2a und 2b des Sekundärluftventiles und von diesen aus in die Abgasanlage der Brennkraftmaschine gelangen kann. Wird hingegen der (obere) tellerförmige Ventilkörper 4a ausgehend von seiner dargestellten Position gemäß Pfeilrichtung 5 nach unten und gleichzeitig der (untere) tellerförmige Ventilkörper 4b gegen Pfeilrichtung 5 nach oben bewegt, so daß sie beide mit ihren Randabschnitten an den die Übertritte 3a, 3b enthaltenden Innen-Trennwänden 6a, 6b des Sekundärluftventiles anliegen, so sind bzw. werden die Übertritte 3a, 3b verschlossen und demzufolge die Verbindungen zwischen dem Eingang 1 und den Ausgängen 2a bzw. 2b unterbrochen. Hierzu sind die Randbereiche der Übertritte 3a, 3b an den jeweiligen Innen-Trennwänden 6a, 6b als Ventilsitze für den jeweils zugeordneten tellerförmigen Ventilkörper 4a bzw. 4b ausgebildet.

Im letztgenannten Zustand, wenn also die Ventilkörper 4a, 4b auf ihren Ventilsitzen aufliegen, kann aus dieser Abgasanlage keine Teilmenge des Brennkraftmaschinen-Abgasstromes zur abgeschalteten (und somit keinen Gegendruck bereitstellenden) Luftpumpe gelangen, so daß diese durch das heiße Abgas nicht geschädigt werden kann. Werden hingegen die beiden Ventilkörper 4a, 4b in ihre figürlich dargestellte Position bewegt, was (wie wie erläutert wird) insbesondere durch eine Inbetriebnahme der Sekundärluftpumpe geschieht, so kann die (gleichzeitig oder vorab in Betrieb gesetzte) Sekundärluftpumpe einen Luftstrom in die Brennkraftmaschinen-Abgasanlage fördern. Dies erfolgt, wie bereits erläutert wurde sowie ersichtlich ist, über die beiden einander gegenüberliegenden Übertritte 3a, 3b, wobei die beiden Ventilkörper 4a, 4b beim Öffnen eine einander entgegengerichtete Hubbewegung ausführen.

Wie bereits erwähnt ist hierfür jeder Ventilkörper 4a, 4b in bzw. gegen Pfeilrichtung 5 verschiebbar. Hierzu wird jeder Ventilkörper 4a, 4b von jeweils einer ihm zugeordneten und im Gehäuse 7 des Sekundärluftventiles ebenfalls gemäß Pfeilrichtung 5 längsverschiebbar bzw. in Richtung ihrer Längsachse verschiebbar geführten Betätigungsstange 8a bzw. 8b getragen, deren dem jeweiligen Ventilkörper 4a, 4b abgewandter Endabschnitt 8a', 8b' jeweils tellerförmig ausgebildet und jeweils mit einer Membran 13a bzw. 13b verbunden ist. Jede Membran 13a, 13b begrenzt (zusammen mit dem tellerförmigen Endabschnitt 8a', 8b' jeder Betätigungsstange 8a, 8b) jeweils eine sog. Ventil-Steuerkammer 14a, 14b und ist hierzu jeweils zwischen einem Deckelteil 15a, 15b des Sekundärluftventiles sowie dem Gehäuse 7 randseitig eingespannt. Zwischen den beiden Membranen 13a, 13b (sowie den beiden tellerförmigen Endabschnitten 8a', 8b' der Betätigungsstangen 8a, 8b) und den jeweiligen Deckelteilen 15a, 15b befindet sich jeweils eine sog. Ausgleichskammer 29a, 29b, die jeweils über eine im Deckelteil 15a bzw. 15b vorgesehene Entlüftungsöffnung 18 mit der Umgebung verbunden ist.

Die beiden Membranen 13a, 13b bzw. genauer die beiden tellerförmigen Endbereiche 8a', 8b' der beiden Betätigungsstangen 8a, 8b sind über ein als Zug-Schraubenfeder ausgebildetes Federelement 17 miteinander verbunden. Durch dieses (hier einzige) Federelement 17 werden die beiden tellerförmigen Endabschnitte 8a', 8b' und demzufolge auch die beiden Membranen 13a, 13b gegeneinander verspannt, und zwar derart, daß dieses Federelement 17 danach trachtet, die beiden Membranen 13a, 13b bzw. die beiden Endabschnitte 8a', 8b' der Betätigungsstangen aufeinander zuzubewegen. Durch dieses letztlich zwischen den beiden Membranen 13a, 13b eingespannte Federelement 17 werden somit - da jeder Ventilkörper 4a, 4b über die jeweiligen Betätigungsstangen 8a, 8b starr mit der jeweils zugeordneten Membran 13a bzw. 13b verbunden ist - auch die beiden Ventilkörper 4a, 4b durch das besagte Federelement 17 aufeinander zubewegt und demzufolge jeweils in ihrer geschlossenen Position gehalten. Dabei sind - wie ersichtlich - die beidseitigen sog. Aufhängestege 17' des Federelementes 17 durch die beiden hohl ausgebildeten Betätigungsstangen 8a, 8b hindurchgeführt und endseitig jeweils in eine entsprechend gestaltete (nicht mit einer separaten Bezugsziffer bezeichnete) Aufnahme im jeweiligen Endabschnitt 8a' bzw. 8b' eingehängt. Ferner durchdringt - wie ersichtlich - das Federelement 17 den Eingang 1 des Sekundärluftventiles bzw. die entsprechende, nicht mit einer separaten Bezugsziffer versehene Eingangskammer, die von den Innen-Trennwänden 6a, 6b begrenzt wird, und von welcher die beiden Übertritte 3a, 3b abzweigen.

Eine weiter oben bereits genannte Öffnungsbewegung der Ventilkörper 4a, 4b kann in Form einer Verschiebung derselben in bzw. gegen Pfeilrichtung 5 durch Anlegen von Steuerdruck an die Membranen 13a, 13b initiiert werden. Hierzu werden die Ventil-Steuerkammern 14a, 14b mit Überdruck beaufschlagt, wofür in diese Steuerkammern 14a, 14b jeweils eine zugeordnete Steuerleitung 20a, 20b mündet, die jeweils mit dem Eingang 1 des Sekundärluftventiles verbunden ist. Ist somit die eingangs genannte Sekundärluftpumpe in Betrieb, so liegt im Eingang 1 des Sekundärluftventiles Überdruck vor, der über die Steuerleitungen 20a, 20b in die Ventil-Steuerkammern 14a und 14b weitergeleitet wird. Dieser in der jeweiligen Steuerkammer 14a bzw. 14b aufgebaute Überdruck bewegt dann die jeweilige Membran 13a bzw. 13b und die Endabschnitte 8a', 8b' der Betätigungsstangen 8a, 8b in einem die Ventilkörper 4a bzw. 4b öffnenden und dabei von ihren Ventilsitzen abhebenden Sinne. Konkrekt wird hierbei der obere Ventilkörper 4a gegen Pfeilrichtung 5 und der untere Ventilkörper 4b in Pfeilrichtung 5 in die figürlich jeweils dargestellte Position bewegt. Lag jeder Ventilkörper 4a, 4b also vor dem Beaufschlagen der ihm zugeordneten Ventil-Steuerkammer 14a bzw. 14b mit Überdruck an der jeweiligen Innen-Trennwand 6a bzw. 6b und somit an seinem jeweiligen Ventilsitz an (und war somit jeder Übertritt 3a, 3b zunächst geschlossen), so werden diese Ventilkörper 4a, 4b nunmehr (nach Inbetriebnahme der Sekundärluftpumpe) von den Innen-Trennwänden 6a, 6b und damit von ihren Ventilsitzen abgehoben, womit die Übertritte 3a, 3b freigegeben werden. Selbstverständlich muß hierfür der in die Ventil-Steuerkammern 14a, 14b eingeleitete Steuerdruck bzw. Überdruck eine ausreichende Höhe besitzen, um diese Verschiebebewegung der beiden Ventilkörper 4a, 4b gegen die Federkraft des Federelementes 17 einleiten zu können, wobei noch darauf hingewiesen sei, daß die damit verbundene - ebenso wie die entgegemgerichtete - Lageveränderung der Endabschnitte 8a', 8b' sowie die entsprechende Volumenveränderung der Steuerkammern 14a, 14b auch durch die Entlüftungsöffnungen 18 in den Ausgleichskammern 29a, 29b, die auf der den Ventil-Steuerkammern 14a, 1b abgewandten Seiten der Endbaschnitte 8a', 8b' der Betätigungsstangen 8a, 8b liegen, ermöglicht wird.

Wie soben und auch eingangs erläutert wurde, stellt die betragsmäßige Höhe des in die Ventil-Steuerkammern 14a, 14b im Hinblick auf eine Öffnungsbewegung der Ventilkörper 4a, 4b einzubringenden Überdrucks eine wesentliche bzw. kritische Größe dar, insbesondere da - wie ebenfalls bereits erläutert wurde - das Federelement 17 hinsichtlich seiner Kraftentfaltung so auszulegen ist, daß in denjenigen Betriebszuständen, in denen das Sekundärluftventil geschlossen bleiben soll, die Ventilkörper 4a, 4b tatsächlich sicher und stets in ihrer geschlossenen Position gehalten werden. Mit den bereits beschriebenen Maßnahmen, nämlich mit einer Aufteilung des von der Sekundärluftpumpe bereitgestellten Überdrucks auf zwei Ventil-Steuerkammern 14a, 14b und somit auf zwei Membranen 13a, 13b (bzw. zugehörige Endabschnitte 8a', 8b' der Betätigungsstangen 8a, 8b) läßt sich die aus diesem Überdruck ableitbare Kraft auf einfache Weise steigern. Gleichzeitig kann - wie ebenfalls vor der Beschreibung dieses bevorzugten Ausführungsbeispieles bereits erläutert wurde - die Kraft des Federelementes 17 relativ gering gehalten werden, da die Querschnittsfläche jedes einzelnen Ventilkörpers 4a, 4b relativ gering gewählt werden kann, so daß die durch Abgaspulsationen und örtlich sowie zeitlich lokal auftretende Unterdruckspitzen an den Ventilkörper 4a, 4b angreifenden Kräfte, die ein unerwünschtes Öffnen dieser Ventilkörper 4a, 4b zur Folge haben könnten, relativ gering sind. Somit ist insgesamt ein betragsmäßig relativ geringer Überdruck in den Ventil-Steuerkammern 14a, 14b ausreichend, wenn die Ventilkörper 4a und 4b bzw. das Sekundärluftventil geöffnet werden soll, so daß durch diese Gestaltung die der vorliegenden Erfindung gestellte Aufgabe in hervorragender Weise gelöst wird.

Dabei können selbstverständlich eine Vielzahl von Details insbesondere konstruktiver Art durchaus abweichend vom gezeigten Ausführungsbeispiel gestaltet sein, ohne den Inhalt der Patentansprüche zu verlassen. Beispielsweise kann anstelle des hier einzigen Federelementes 17 alternativ für jeden Ventilkörper 4a, 4b ein eigenes, ihn in seiner Schließposition haltendes Federelement vorgesehen sein, wenngleich sich die gezeigte und erläuterte Ausgestaltung durch eine besonders vorteilhafte, da raumsparende und Bauteile sparende Konstruktion und Kinematik auszeichnet. Auch läßt sich das - wie ersichtlich mittig geteilte und in sich symmetrische Gehäuse 7 des Sekundärluftventiles einfach und unter Anwendung des Gleichteileprinzipes besonders günstig fertigen. In der Beschreibung nicht näher eingegangen wurde dabei auf selbstverständlich erforderliche Abdichtmaßnahmen, die im Hinblick auf eine optimale Funktion erforderlich sind bzw. sein können. Stets erhält man jedoch mit den beschriebenen Maßnahmen ein Sekundärluftventil, das mit geringem Aufwand sicher und zuverlässig betrieben werden kann.

### Bezugszeichenliste:

- 1: Eingang
- 2a, 2b: Ausgang
- 3a, 3b: Übertritt
- 4a, 4b: Ventilkörper
- 5: Pfeilrichtung
- 6a, 6b: Innen-Trennwand
- 7: Gehäuse (des Sekundärluftventiles)
- 8a, 8b: Betätigungsstange
- 8a', 8b': tellerförmiger Endabschnitt von 8a, 8b
- 13a, 13b: Membran
- 14a, 14b: Ventil-Steuerkammer
- 15a,15b: Deckelteil (des Sekundärluftventiles)
- 17: Federelement
- 18: Entlüftungsöffnung
- 20a, 20b: Steuerleitung
- 29a, 29b: Ausgleichskammer

## Patentansprüche

1. Sekundärluftventil zur Zuführung von Zusatzluft zum Abgasstrom einer Brennkraftmaschine, dessen Eingang (1) mit der Förderseite einer Luftpumpe und dessen Ausgang (2a, 2b) mit der Abgasanlage der Brennkraftmaschine verbunden ist, und wobei der einen Übertritt (3a,3b) vom Eingang (1) zum Ausgang (2a, 2b) steuernde Ventilkörper (4a, 4b) des Sekundärluftventils durch ein Federelement (17) in seiner geschlossenen Position gehalten wird und mittels einer in einer Ventilsteuerkammer (14a, 14b) angeordneten Membran (13a, 13b) durch Beaufschlagen einer Seite dieser Membran (13a, 13b) mit von der Luftpumpe bereitgestelltem Überdruck geöffnet wird,
**dadurch gekennzeichnet, dass** zwei von einander getrennte Ausgänge (2a, 2b) und zwei Übertritte (3a, 3b) vom Eingang (1) zu den Ausgängen (2a,2b) vorgesehen sind, denen jeweils ein Ventilkörper (4a, 4b) sowie eine diesen öffnende Membran (13a, 13b) zugeordnet ist und die beiden Membranen (13a, 13b) über das als Zug-Schraubenfeder ausgebildete Federelement (17) miteinander verbunden sind.

2. Sekundärluft-Ventil nach Anspruch 1, wobei jeder Ventilkörper (4a, 4b) über eine Betätigungsstange (8a, 8b) mit der ihm zugeordneten Membran (13a, 13b) verbunden und somit in Längsrichtung dieser Betätigungsstange (8a, 8b) von seinem Ventilsitz abhebbar ist,
**dadurch gekennzeichnet, daß** die Übertritte (3a, 3b) einander gegenüberliegen und die beiden Ventilkörper (4a, 4b) beim Öffnen eine einander entgegengerichtete Hubbewegung ausführen.

## Claims

1. A secondary air valve for supplying additional air to the exhaust gas from an internal combustion engine, the valve inlet (1) being connected to the delivery side of an air pump and its outlet (2a, 2b) being connected to the engine exhaust system, wherein the secondary air valve member (4a, 4b), which controls an overflow (3a, 3b) from the inlet (1) to the outlet (2a, 2b), is held in the closed position by a spring element (17) and is opened via a diaphragm (13a, 13b) disposed in a valve control chamber (14a, 14b) when one side of the diaphragm (13a, 13b) is acted upon by excess pressure provided by the air pump,
**characterised in that** two separate outlets (2a, 2b) and two overflows (3a, 3b) from the inlet (1) to the outlet (2a, 2b) are provided, each being associated with a valve member (4a, 4b) and a diaphragm (13a, 13b) for opening it, and the two diaphragms (13a, 13b) are interconnected by the spring element (17), which is in the form of a helical tension spring.

2. A secondary air valve according to claim 1, wherein each valve member (4a, 4b) is connected by an actuating rod (8a, 8b) to the associated diaphragm (13a, 13b) and can consequently be lifted off its valve seat in the longitudinal direction of the actuating rod (8a, 8b),
**characterised in that** the overflows (3a, 3b) are opposite one another and the two valve members (4a, 4b) move in a stroke in opposite directions when opened.

## Revendications

1. Vanne d'air secondaire pour fournir de l'air complémentaire à la veine des gaz d'échappement d'un moteur à combustion interne, dont l'entrée (1) est reliée au côté de refoulement d'une pompe à air et dont la sortie (2a, 2b) est reliée au système d'échappement du moteur à combustion interne, le corps de soupape (4a, 4b) de la vanne d'air secondaire qui commande un passage (3a, 3b) de l'entrée (1) vers la sortie (2a, 2b) étant maintenu en position fermée par un élément de ressort (17), et ouvert par une membrane (13a, 13b) installée dans une chambre de commande de soupape (14a, 14b) par application de la pression fournie par la pompe à air sur une face de cette membrane (13a, 13b),
**caractérisée par**
deux sorties séparées (2a, 2b) et deux passages (3a, 3b) de l'entrée (1) vers les sorties (2a, 2b) auxquelles est associée chaque fois un corps de soupape (4a, 4b) et une membrane (13a, 13b) ouvrant ce corps de soupape, les deux membranes (13a, 13b) étant reliées l'une à l'autre par un élément de ressort (17) en forme de ressort hélicoïdal de traction.

2. Vanne d'air secondaire selon la revendication 1, dont le corps de soupape (4a, 4b) est relié par une tige d'actionnement (8a, 8b) à la membrane associée (13a, 13b) et peut ainsi être soulevée de son siège dans la direction longitudinale de cette tige d'actionnement (8a, 8b),
**caractérisée en ce que**
les passages (3a, 3b) sont opposés l'un à l'autre et les deux corps de soupapes (4a, 4b) effectuent des mouvements dirigés en sens opposés pour l'ouverture.
